# EUROPEAN PATENT APPLICATION

(11) **EP 1 936 990 A2**
(43) Date of publication of application: **25.06.2008**
(21) Application number: 07118525.0
(22) Date of filing: 15.10.2007
(51) Int. Cl.: H04N 7/24

(54) **Digital broadcast receiving apparatus and synchronization method**

(30) Priority: 22.12.2006 KR 20060132809
(71) Applicant: Samsung Electronics Co., Ltd, Suwon-si, Gyeonggi-do 443-742 (KR)
(72) Inventor: Park, Jomg-pill, Yeongtong-gu, Suwon-si, Gyeonggi-do 521-506 (KR)
(74) Representative: Grootscholten, Johannes A.M.

(57) **Abstract**

A digital broadcast receiving apparatus which supports a high-definition multimedia interface-consumer electronics control (HDMI-CEC) function is provided including, an input part which inputs a user command; an HDMI interface part which communicates with a plurality of external devices; and a controller for synchronizing time information of the plurality of the external devices through the HDMI interface part, according to the user command. Accordingly, a synchronization of the plurality of external devices connected through the HDMI interface part can be achieved.

## Description

### BACKGROUND

### 1. Field of the Invention

Apparatuses and methods consistent with the present invention relate to a digital broadcast receiving apparatus and a synchronization method thereof. More particularly, apparatuses and methods consistent with the present invention relate to a digital broadcast receiving apparatus for executing synchronization with a plurality of devices using a high-definition multimedia interface-consumer electronics control (HDMI-CEC) function, and a synchronization method of the digital broadcast receiving apparatus.

### 2. Description of the Related Art

In the 21st century, the saturated color TV market raises the necessity of a new market for broadcast receiving apparatuses. Beyond the existing color TVs of the simple monitor function that viewers merely watch and listen to, what have been demanded are broadcast receiving apparatuses that allow saving and reproduction of external video signals, and allow information exchange by a transmission medium such as cable.

In response to the needs of the times, digital TVs having multimedia functions and overcoming the limitations of the existing analog technology, have been introduced to meet diverse demands of viewers and have led to the creation of a new TV market.

Present-day digital broadcasting provides even better services to users by transmitting vivid images and sounds closer to CD quality sound, as compared to conventional analog broadcasting. According to the future digital broadcasting plan, digital broadcast TVs and set-top boxes are under development.

With the vigorous development of digital technology and related products, types of external devices connectable to the digital TV are increasing. Such external devices include personal video recorders (PVRs), DVD players, set-top boxes, computers, VCRs, and home theatres. For connecting with such external devices, the digital TV is equipped with Composite, S-Video, Component, RGB, Digital Visual Interface (DVI), and high-definition multimedia interface (HDMI) connectors. The HDMI connector supports an HDMI-CEC function. When an HDMI signal is output from the external device, a Consumer Electronics Control (CEC) function of the HDMI is supported.

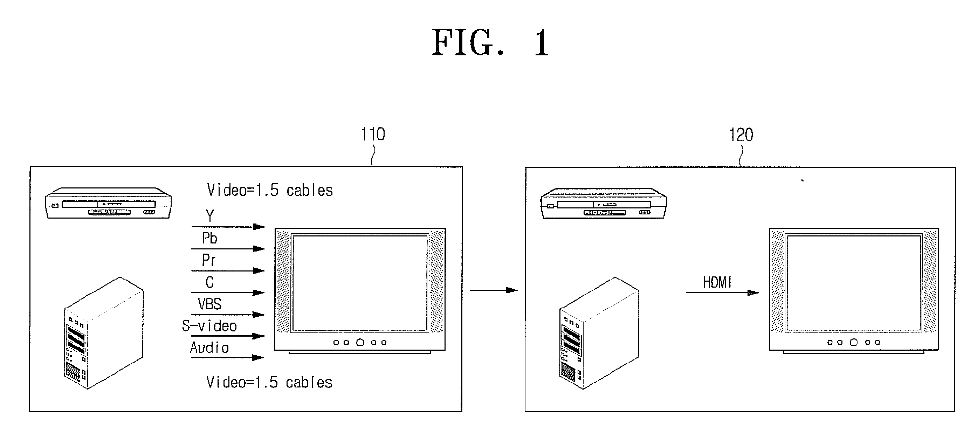

FIG. 1 is a drawing to explain a related art high-definition multimedia interface (HDMI). In a system 120, which incorporates the existing RGB, Y, Cb/Cr channels and audio channel of a system 110 into a single channel, the HDMI is a technique to incorporate a high-definition video signal and a multi-channel audio signal interface into a single digital interface having a bandwidth more than 5 Gbps.

The system described above connects to a plurality of HDMI devices based on an HDMI-CEC function, and can control the HDMI devices all together by controlling a master device. However, time information difference among the devices may lead to an error in the timer recording and an ON/OFF operation.

### SUMMARY

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a digital broadcast receiving apparatus for carrying out synchronization with a plurality of devices connected through an HDMI interface by using a high-definition multimedia interface-consumer electronics control (HDMI-CEC) function, and a synchronization method thereof.

According to an aspect of the present invention, a digital broadcast receiving apparatus which supports a high-definition multimedia interface-consumer electronics control (HDMI-CEC) function, includes an input part which inputs a user command; an HDMI interface part which communicates with a plurality of external devices; and a controller for synchronizing time information of the plurality of external devices through the HDMI interface when a user command is input.

The controller may transmit reference time information to each of the external devices and may receive from each of the external devices, a synchronized time information, which has been synchronized based on the transmitted reference time information. When the received time information differs from the transmitted reference time information, the controller may retransmit the reference time information.

The controller may transmit the reference time information in a CEC channel.

The controller may transmit the reference time information in the form of a digital stream, which may include a header area containing a sender address and a recipient address, and a data area containing an operation (OP) code, which indicates the synchronization, and the reference time information.

The controller may correct errors generated due to characteristics of each of the external devices, by periodically checking the time information of each external device.

The digital broadcast receiving apparatus may further include a memory for storing unique information and synchronization error information of a corresponding external device, when the received time information differs from the reference time information; and a warning generator for informing a user of the synchronization error.

According to another aspect of the present invention, a digital device which supports an HDMI-CEC function includes a receiver for receiving reference time information from a digital broadcast receiving apparatus which supports an HDMI-CEC function; and a controller for performing synchronization based on the received reference time information and transmitting the synchronized time information to the digital broadcast receiving apparatus.

The controller may transmit the synchronized time information in a CEC channel.

According to another aspect of the present invention, a synchronization method of a digital broadcast receiving apparatus, which supports a high-definition multimedia interface-consumer electronics control (HDMI-CEC) function, includes receiving a user command for executing synchronization with a plurality of external devices connected to the digital broadcast receiving apparatus; and performing synchronization with respect to each of the external devices through a CEC channel, according to the user command that is input.

The synchronization method may further include, performing synchronization by transmitting reference time information to each of the external devices through a CEC channel and receiving time information from each of the external devices, that has been synchronized based on the reference time information; and checking the received time information and retransmitting the reference time information to an unsynchronized external device.

The synchronization method may further include periodically checking the time information of the respective external devices; and correcting errors that may have been generated due to a characteristic of the respective external devices.
The synchronization method may further include storing unique information and synchronization error information of a corresponding external device when the received time information differs from the transmitted reference time information; and informing a user of the synchronization error.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a drawing to explain a related art HDMI interface;
FIG. 2 is a block diagram of a digital broadcast receiving apparatus according to an exemplary embodiment of the present invention;
FIG. 3 is a drawing to explain a relationship between an HDMI source device and an HDMI sink device;
FIGS. 4A, 4B, and 4C are drawings illustrating a CEC protocol message format transmitted in a CEC channel;
FIGS. 5A and 5B are drawings illustrating physical addresses and logical addresses of devices;
FIG. 6 is a block diagram of a digital broadcast receiving apparatus according to another exemplary embodiment of the present invention;
FIG. 7 is a block diagram of a device supporting an HDMI-CEC function according to an exemplary embodiment of the present invention;
FIG. 8 is a flowchart to explain a synchronization method of a digital broadcast receiving apparatus according to an exemplary embodiment of the present invention; and
FIG. 9 is a detailed flowchart to explain in detail a synchronization method of the digital broadcast receiving apparatus illustrated in FIG. 8.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the description with unnecessary detail.

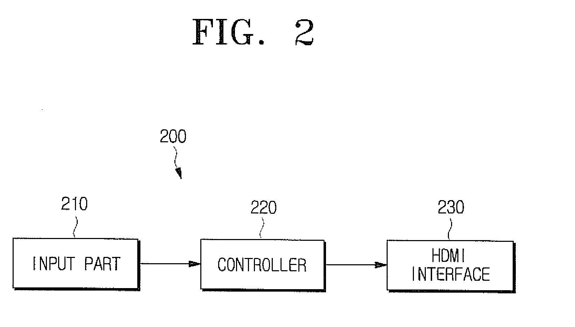

FIG. 2 is a block diagram of a digital broadcast receiving apparatus according to an exemplary embodiment of the present invention. The digital broadcast receiving apparatus of FIG. 2 includes an input part 210, a controller 220, and an HDMI interface part 230.

The digital broadcast receiving apparatus 200 can be implemented using a digital broadcast receiver supporting a high-definition multimedia interface-consumer electronics control (HDMI-CEC) function. The HDMI-CEC function is a function for controlling CEC products through an HDMI interface. In other words, the HDMI-CEC function can support automatic power-on, automatic signal routing, and single-point remote control functions of the CEC products, similar to options of the HDMI interface.

The HDMI interface may include three independent communication channels such as a Transition Minimized Differential Signaling (TMDS) channel, a Display Data Channel (DDC) channel, and a Consumer Electronics Control (CEC) channel. Through these channels, the HDMI interface can transmit and receive A/V data, device data, and control commands.

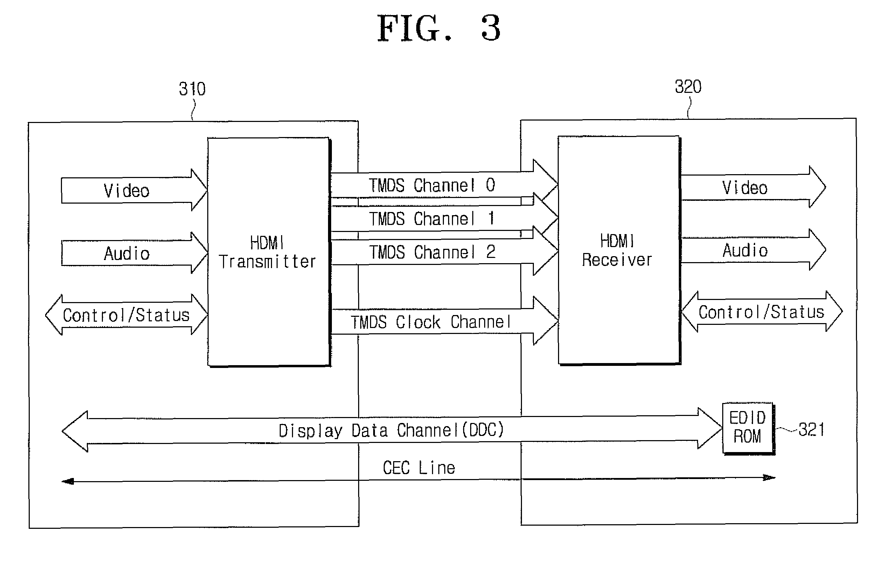

FIG. 3 is a drawing to explain a relationship between an HDMI source device and an HDMI sink device. The HDMI source device can be implemented using an external device, and the HDMI sink device can be implemented using the digital broadcast receiving apparatus 200 of FIG. 2.

The HDMI source device 310 sends video signals and audio signals to the HDMI sink device 320 through a TMDS channel. The HDMI sink device 320 receives the video signals and the audio signals through the TMDS channel and stores its specification information to EDIDROM 321. Herein, the TMDS channel supports data transmission below 5 Gbps and transceives the video signal and the audio signal.

The HDMI source device 310 can transmit an optimized video and audio signal to the HDMI sink device 320 by inquiring of detailed information stored in the EDIDROM 321 of the HDMI sink device 320 through the DDC channel. The DDC channel, which is the data communication standard created by Video Electronics Standards Association (VESA), can implement an optimum screen by referring to the specification information of the HDMI source device 310. The HDMI source device 310 can acquire the detailed information of the HDMI sink device 320 using Extended Display Identification Data (EDID) output from the HDMI sink device 320 through the DDC channel. Using the EDID, the HDMI source device 310 converts the media data in accordance with the display environment of the HDMI sink device 320 and sends the converted media data to the HDMI sink device 320 through the TMDS channel. The EDID may include, for example, a manufacturer ID, product ID indicating a product model, support for a power saving function of the display device, and timing information. The EDID may also include audio format information of the HDMI sink device 320. The HDMI source device 310 can acquire the audio format information of the HDMI sink device 320 by parsing the EDID. Herein, the HDMI source device 310 can be implemented using a media data reproducing and processing device such as a DVD player, and the HDMI sink device 320 can be implemented using a device which receives media data from the HDMI source device 310 and displays the media data, such as a digital TV, but is not limited to these devices. Note that the HDMI source device 310 and the HDMI sink device 320 may be implemented using various devices.

The HDMI source device 310 and the HDMI sink device 320 may transceive control commands in the CEC channel. The CEC channel, which is an optional protocol for a high-level control function of the HDMI, is usable at a low data rate with a small memory capacity.

The input part 210 serves to receive user commands and can be implemented using a remote control device such as an operation panel or a remote controller. For instance, when a user command is input through a remote controller of the digital broadcast receiving apparatus 200, every device connected through the HDMI interface can be operated.

The HDMI interface part 230 is responsible for communication with a plurality of external devices. The HDMI interface part 230 can be implemented using an HDMI connector of the digital broadcast receiving apparatus 200. For instance, when a user command is input through the input part 210, the operation of every device connected through the HDMI interface part 230 can be carried out. Specifically, a control signal can be transmitted in the CEC channel.

The controller 220 synchronizes time information of the plurality of the external devices connected through the HDMI interface part 230, when a user command is input through the input part 210. The external devices may include devices supporting the HDMI-CEC function now or later, such as a PVR, a DVD player, a set-up box (STB), a computer, a VCP, and a home theatre.

Further, the controller 220 transmits synchronization information to each of the external devices and receives time information from each external device, that has been synchronized based on the transmitted reference time information. When there exists a difference between the received time information and the transmitted reference time information, the controller 220 may retransmit the reference time information. The controller 220 may transmit the reference time information and the related control signal in a CEC channel, which enables transmission of the control command.

The controller 220 may transmit the reference time information as a digital stream, which may include a header area containing a sender address and a recipient address, and a data area containing an operation (OP) code indicating the synchronization and the reference time information. Herein the OP code is a code indicating a type of process to be controlled.

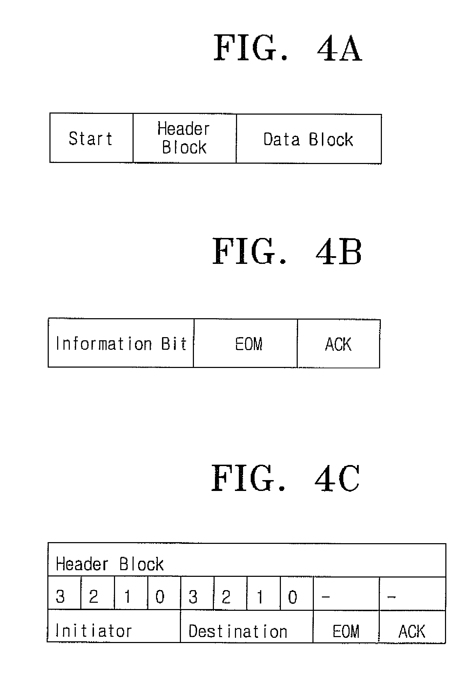

FIGS. 4A, 4B, and 4C depict a CEC protocol message format transmitted in the CEC channel of the HDMI interface part, and detailed structures of the component blocks.

FIG. 4A is a drawing to explain the CEC protocol message format transmitted in the CEC channel.

The CEC protocol message of FIG. 4A includes a Start indicating the start of data, a Header Block indicating addresses of a sender and a recipient, and a Data Block containing the delivered data.

FIG. 4B is a detailed block diagram of the header block and the data block of FIG. 4A. The header block and the data block each include an information bit, an EOM, and an ACK as shown in FIG. 4B. The information bit carries actual data, the EOM indicates the end of the message, and the ACK partitions the header block and the data block.

FIG. 4C is a drawing illustrating a detailed structure of the header block shown in FIG. 4A. In the header block of FIG. 4C, the information bit includes logical addresses of an initiator (sender) and a destination (recipient).

While every device in the HDMI environment has a physical address, the CEC channel utilizes logical addresses to acquire information about the type of device, by translating the physical address of the device to a logical address.

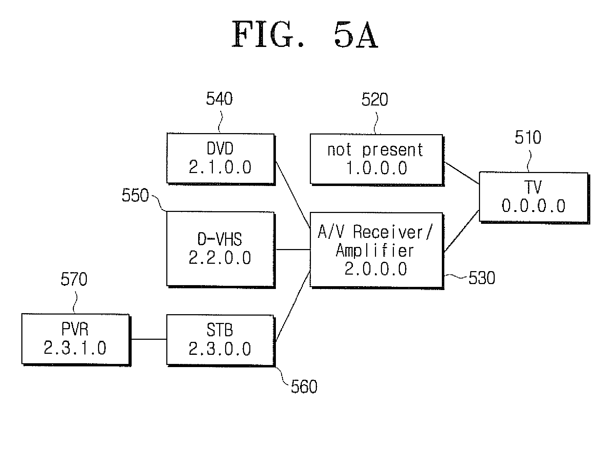

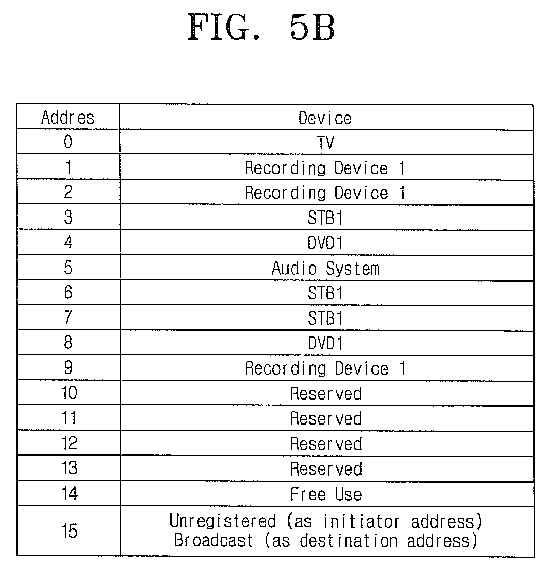

FIGS. 5A and 5B are drawings to explain physical addresses and logical addresses of devices.

FIG. 5A shows the physical addresses of various devices, and FIG. 5B shows the logical addresses of the same devices. First referring to FIG. 5A, the devices 510, 530 through 570 having the normal physical addresses are assigned the logical addresses as shown in FIG. 5B.

The controller 220 can correct error generating due to a characteristic of the external devices by periodically checking the time information of the respective external devices. Each external device maintains its time information using a crystal (oscillator), which may be unique to each device. Even though time information of the external device is synchronized with the digital broadcast receiving apparatus 200, there may exist an error according to the accuracy of the device's crystal with passage of time. In this case, the error correction can be performed in a manner similar to the synchronization with the digital broadcast receiving apparatus 200. That is, the digital broadcast receiving apparatus 200 periodically receives the time information of each device and synchronizes its time information with the time information of the external device having the error time information, when the reference time information differs from the received time information.

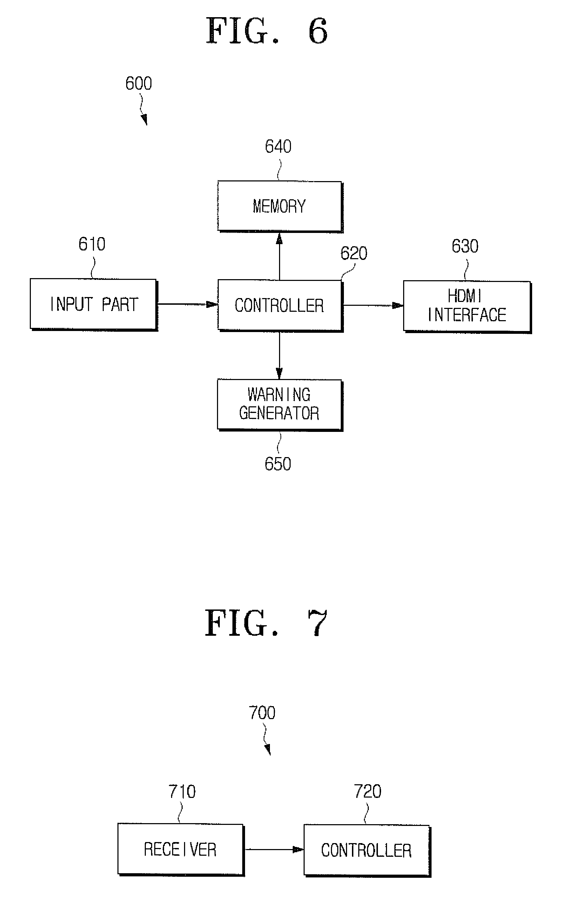

FIG. 6 is a block diagram of a digital broadcast receiving apparatus 600 according to another exemplary embodiment of the present invention. The digital broadcast receiving apparatus 600 of FIG. 6 includes an input part 610, a controller 620, an HDMI interface part 630, a memory 640, and a warning generator 650. The same components in FIG. 6 as in FIG. 2 are not explained in detail.

When the time information received from the external devices differs from the reference time information, the memory 640 stores unique information and synchronization error information of the corresponding external device.

The warning generator 650 serves to inform the user of the synchronization error. The synchronization error can be presented to the user in various forms such as voice processing or OSD processing.

FIG. 7 is a block diagram of a digital device supporting an HDMI-CEC function according to an exemplary embodiment of the present invention. The digital device of FIG. 7 includes a receiver 710 and a controller 720.

The digital device 700 may correspond to the HDMI source device in FIG. 2 and can be implemented using any device supporting the HDMI-CEC function now or later, for example, using PVR, DVD player, STB, computer, VCP, and home theatre supporting the HDMI-CEC function.

The receiver 710 is responsible for receiving the reference time information from a digital broadcast receiving apparatus (not shown) which supports the HDMI-CEC function. In the CEC channel, the receiver 710 can receive time information in the form of a message as shown in FIGS. 4A, 4B, and 4C.

The controller 720 functions to synchronize the time information of the digital device 700 with the reference time information received through the receiver 710 and to transmit the synchronized time information to the digital broadcast receiving apparatus (not shown). The controller 720 can send the synchronized time information to the digital broadcast receiving apparatus (not shown) in the CEC channel.

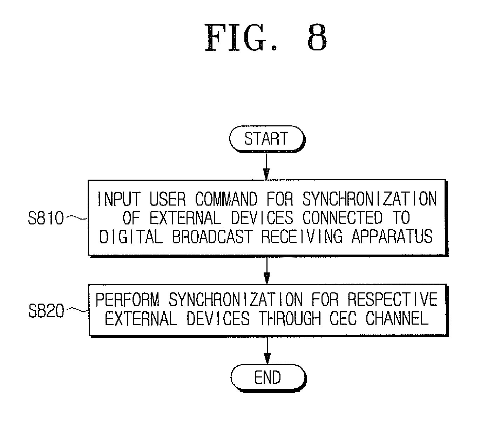

FIG. 8 is a flowchart to explain a synchronization method of a digital broadcast receiving apparatus according to an exemplary embodiment of the present invention. In the synchronization method of the digital broadcast receiving apparatus which supports an HDMI-CEC function in FIG. 8, a user command is received for performing synchronization with a plurality of the external devices connected to the digital broadcast receiving apparatus (S810). The synchronization is executed with respect to every external device through the CEC channel (S820).

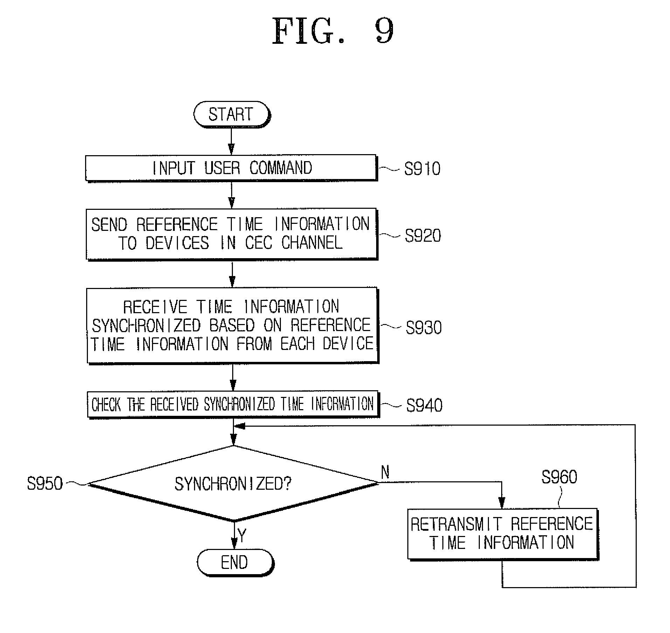

FIG. 9 is a flowchart to explain in detail the synchronization method of the digital broadcast receiving apparatus illustrated in FIG. 8 according to an exemplary embodiment of the present invention.

Upon receiving a user command for performing synchronization with a plurality of external devices connected to the digital broadcast receiving apparatus (S910), reference time information is transmitted to each of the external devices in the CEC channel (S920). Next, time information that has been synchronized based on the reference time information is received from the respective external devices (S930).

The digital broadcast receiving apparatus checks the synchronized time information received from the external devices (S940), and determines whether the external devices have been synchronized. (S950). If the external devices have not been synchronized (S950-N), the reference time information is retransmitted (S960).

The digital broadcast receiving apparatus can correct the error generating due to a characteristic of the device by periodically checking the time information of the external devices.

If the received time information differs from the transmitted reference time information, the digital broadcast receiving apparatus can store unique information and synchronization error information of the corresponding external device and inform the user of a synchronization error.

Therefore, a synchronization of a plurality of devices connected through the HDMI interface can be accomplished.

As described above, it is possible to synchronize with a plurality of devices connected through the HDMI interface by virtue of the HDMI-CEC function. Consequently, an error in the timer recording or in the ON/OFF timer operation can be prevented, thus enhancing the user's convenience.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A digital broadcast receiving apparatus which supports a high-definition multimedia interface-consumer electronics control (HDMI-CEC) function, said apparatus comprising:
an input part, which inputs a user command;
an HDMI interface part, which communicates with a plurality of external devices; and
a controller which synchronizes time information of the plurality of the external devices through the HDMI interface part, according to the user command.

2. The digital broadcast receiving apparatus of claim 1, wherein the controller transmits reference time information to each of the plurality of external devices, and receives time information from each of the plurality of external devices that has been synchronized based on the reference time information , and
when the received time information differs from the transmitted reference time information, the controller retransmits the reference time information.

3. The digital broadcast receiving apparatus of claim 2, wherein the controller transmits the reference time information in a CEC channel.

4. The digital broadcast receiving apparatus of claim 3, wherein the controller transmits the reference time information in the form of a digital stream, which includes a header area containing a sender address and a recipient address, and a data area containing an operation (OP) code, which indicates the synchronization, and the reference time information.

5. The digital broadcast receiving apparatus of claim 2, wherein the controller corrects error generating due to a characteristic of each of the plurality of external devices by periodically checking the time information of each of the plurality of external devices.

6. The digital broadcast receiving apparatus of claim 2, further comprising:
a memory which stores unique information and synchronization error information of a corresponding external device of the plurality of external devices, if the received time information differs from the transmitted reference time information; and
a warning generator which informs a user of a synchronization error.

7. A digital device which supports an HDMI-CEC function, comprising:
a receiver which receives reference time information from a digital broadcast receiving apparatus which supports an HDMI-CEC function; and
a controller which performs synchronization of a time information of the digital device based on the received reference time information and transmits a synchronized time information to the digital broadcast receiving apparatus.

8. The digital device of claim 7, wherein the controller transmits the time information in a CEC channel.

9. A synchronization method for a digital broadcast receiving apparatus which supports a high-definition multimedia interface-consumer electronics control (HDMI-CEC) function, the method comprising:
receiving a user command for performing synchronization of time information of a plurality of external devices connected to the digital broadcast receiving apparatus; and
performing synchronization of the time information through a CEC channel, according to the user command.

10. The method of claim 9, wherein the performing synchronization comprises:
transmitting reference time information to each of the plurality of external devices in the CEC channel and receiving time information from each of the plurality of external devices that has been synchronized based on the transmitted reference time information; and
comparing the received time information with the transmitted reference time information, and retransmitting the reference time information to a device of the plurality of external devices, an determining if the device is unsynchronized.

11. The method of claim 9, further comprising:
periodically checking the time information of the plurality of external devices; and
correcting error generating due to a characteristic of the plurality of external devices.

12. The method of claim 10, further comprising:
storing a unique information and a synchronization error information of a corresponding external device of the plurality of external devices, if the received time information differs from the transmitted reference time information; and
informing a user of the synchronization error.

13. The method of claim 10, wherein the device is determined to be unsynchronized, if the received time information differs from the transmitted reference time information.
